## Europäisches Patentamt

## European Patent Office

## Office européen des brevets

(11) Publication number: **0 055 656**
**B1**

(12) **EUROPEAN PATENT SPECIFICATION**

(45) Date of publication of patent specification: **31.07.85**

(51) Int. Cl.⁴: **B 23 P 11/00** // B21D39/00

(21) Application number: **81402018.6**

(22) Date of filing: **17.12.81**

(54) **Method of fastening a first shell to a second shell to form a sealed housing.**

(30) Priority: **22.12.80 US 219078**

(43) Date of publication of application:
**07.07.82 Bulletin 82/27**

(45) Publication of the grant of the patent:
**31.07.85 Bulletin 85/31**

(84) Designated Contracting States:
**DE FR GB**

(56) References cited:
**DE-A-2 925 550**
**US-A-3 158 930**
**US-A-3 442 182**
**US-A-3 914 852**
**US-A-3 977 299**

(73) Proprietor: **THE BENDIX CORPORATION**
**Executive Offices Bendix Center**
**Southfield Michigan 48037 (US)**

(72) Inventor: **Dorsett, Henry**
**1124 S. Redbud Dr.**
**LaPorte Indiana 46350 (US)**
Inventor: **Gatt, Michael Earl**
**11455 Windemere Ct.**
**Osceola Indiana 46561 (US)**

(74) Representative: **Huchet, André et al**
**Service Brevets Bendix 44, rue François 1er**
**F-75008 Paris (FR)**

Courier Press, Leamington Spa, England.

## Description

This invention relates to a method of fastening a first shell to a second shell to form a sealed housing, for instance for a vacuum or pneumatic servomotor for power brake systems.

Devices for fastening shells together have been proposed and are illustrated, for instance, in US—A—3 158 930 and US—A—3 977 299. In these fasteners, a bead on a diaphragm is urged into contact with a preformed shoulder on an annular wall of a first shell. Tabs on a second shell are positioned in slots in the first shell which prevent rotation between the first and second shells. When the tabs engage the bottom of the slots, the annular wall on the first shell is crimped to hold the bead against the shoulder and seal the housing from the surrounding environment.

As long as the dimensions of the bead of the diaphragm, depth of slots and position of the shoulder are made to specification, this seal is adequate. Unfortunately, tolerances are permitted for each component. If the individual parts are at opposite tolerance limits, an additive effect may occur and under some condition, the seal may be expected to leak.

It is, therefore, an object of the present invention to provide an improved method of fastening shells together which avoids the above-mentioned drawback and makes it sure to correctly seal the interior of the housing from the surrounding environment under all circumstances.

Starting from a known method of fastening a first housing shell to a second housing shell by crimping a peripheral surface on the first shell around a peripheral surface on the second shell to axially compress therebetween a bead of a diaphragm to the above defined purpose, said method comprising the steps of:

a) placing on a fixture the second shell which includes a radial wall with a circumferential radial groove located in a projection and formed adjacent a radial flange constituting its peripheral surface;

b) positioning a bead of a diaphragm assembly in said groove to define a first chamber between said radial wall and diaphragm assembly;

c) placing the peripheral surface on an opened end of an annular wall of the first shell over said bead to surround the peripheral surface of the second shell, said first shell and diaphragm assembly defining a second chamber;

d) moving the first shell axially toward the second shell until the radial flange of the latter engages a stop on the former; and

e) crimping the first shell peripheral surface into engagement with the second shell radial flange to hold the latter in engagement with the stop, the above stated object is achieved, in accordance with the teaching of this invention, thanks to the fact that the method further includes the steps of:

f) deforming the first shell annular wall over said bead adjacent said stop to urge said bead on the diaphragm assembly into said groove to seal said first and second chambers from each other and the surrounding environment;

g) moving the crimped first and second shells to a second fixture;

h) rotating said second fixture while moving a tool into engagement with said annular wall adjacent said stop; and

i) applying a uniform force to the annular wall through the tool to form a rib on the interior of the annular wall that radially compresses the bead into the groove of the second shell.

Methods of fastening two shells together to form a sealed housing and including a shell wall deforming step have already been proposed in other fields of the technique, for instance by US—A—3 914 852 for the specific case of a universal joint for use in transmissions. This document teaches such a method wherein one of the shells having a circumferential radial groove formed adjacent a radial flange is placed on a fixture, a bead of a diaphragm is inserted into said groove, an opened end of an annular wall of the other shell is positioned over said bead and then crimped over said radial flange, and said annular wall is further deformed to radially compress the bead of the diaphragm into said groove. This document, however, deals with the particular problem of attachment and retention of the oil seal in a universal joint, and does not suggest that such a method might be applied to joining the two shells of a stationary housing for a vacuum or pneumatic brake booster; likewise, it does not teach how the method could be carried out in such a case, nor does it give an idea of the advantages to be expected in this particular field.

An essential advantage of this invention results from the deformation that is put into the annular wall after the crimping operation to urge the bead on the diaphragm assembly into sealing engagement with the first and second shells. Any leak which is detected after the initial deformation of the annular wall can easily be corrected by increasing the deformation to adequately flow the bead into the groove to achieve the desired sealing.

Another advantage of this invention occurs since the frictional resistance between the bead, rib and groove is sufficient to prevent relative movement between the first and second shells, thereby eliminating the need for slots and tabs as in the prior art.

These and other advantageous features of the invention will become readily apparent from reading the following description of a preferred embodiment, given by way of example only, and with reference to the accompanying drawings, in which:

— Figure 1 is a schematic illustration of a first shell, a diaphragm assembly and a second shell with a selectional view of the components through which the first and second shells are fastened together by the method of this invention to form a sealed housing for a servomotor;

— Figure 2 is a schematic illustration of the first and second shells in a crimper apparatus;

— Figure 3 is schematic illustration of the housing after crimping in a deformation apparatus; and

— Figure 4 is a sectional view taken along circumscribed section 4 of Figure 3 showing the relationship between the first and second shells and diaphragm after being subjected to deformation.

The servomotor shown in the drawings is assembled in a known per se manner with the exception of the fastening of the first shell 10 to a second shell 12.

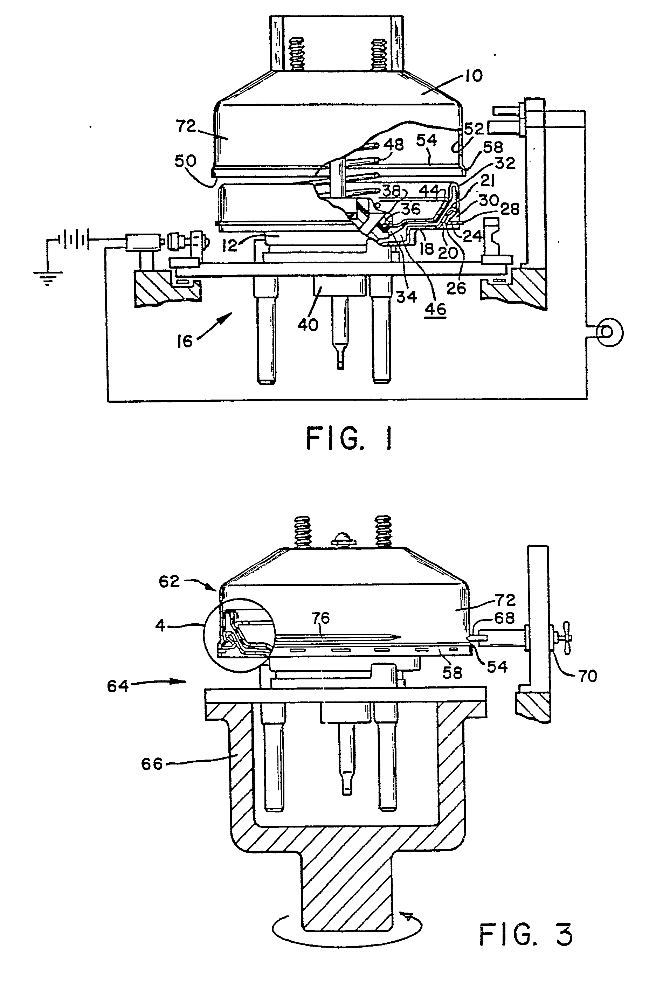

As shown in Figure 1, the second shell 12 is placed on a fixture 16. The second shell 12 has a radial wall 18 with a conical section 20 projecting therefrom. A flange 24 is rolled back from the conical section to produce a groove 26. The peripheral edge 28 of the flange section 24 is at a substantially fixed radius from the axis of the second shell 12.

A first bead 30 of diaphragm 32 snaps into groove 26 and a second bead 34 is positioned in a groove 36 on hub 38 to hold a backing plate 44 on hub 38. Hub 38 which retains the valve, not shown, for controlling the operation of the resulting servomotor, has a projection 40 that extends through an opening in shell 12. The hub 38, diaphragm 32, and shell 12 cooperate to define a chamber 46.

When the hub 38 and bead 30 of diaphragm 32 are attached to shell 12, a spring 48 is placed on the hub 38. Thereafter, the first shell 10 is aligned with second shell 12. A force is applied to the first shell 10 to move peripheral surface 50 into engagement with diaphragm 32. The lip 21 and the thickness of diaphragm 32 are selected such that the dimension of bore 52 adjacent shoulder 54 passes over the bead 30 of diaphragm 32 without binding.

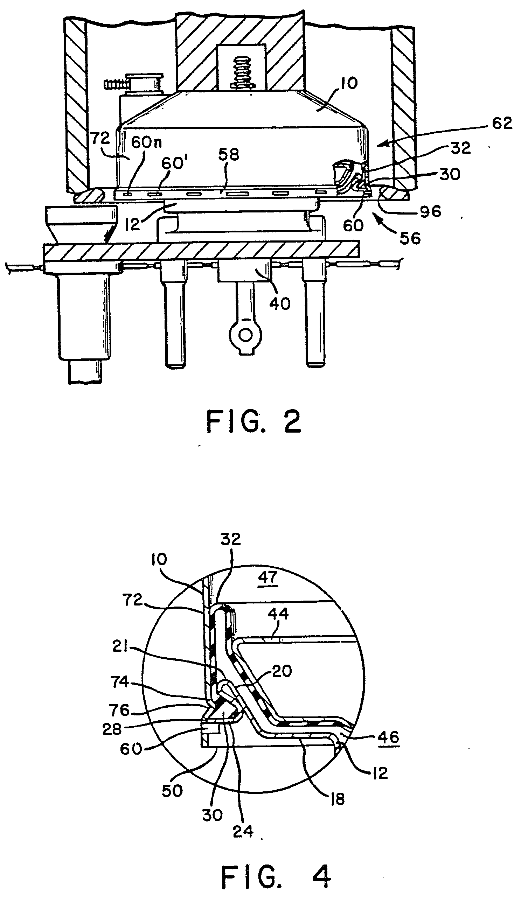

When the peripheral surface 28 engages shoulder 54, a crimping apparatus 56 of the type disclosed in US Patent No. 3 158 930 is brought into engagement with wall 58. As shown in Figure 2, tangs 60, 60' ... $60_n$ are punched in wall 58. The tangs 60, 60' ... $60_n$ engage flange 24 to hold the flange 24 against shoulder 54, as shown in Figure 2, and thereby connect the first shell 10 with the second shell 12 to form housing 62.

The housing 62 is removed from fixture 16 and placed on a second fixture 64 shown in Figure 3. Fixture 64 may be independent from a known production line or the final assembly station thereof.

When housing 62 is fixed to base 66 an input signal is transmitted to the motor which rotates base 66. Thereafter, an end wheel 68 on tool 70 is brought into engagement with the side wall 72 adjacent shoulder 54. Movement of tool toward servomotor housing 62 continues until groove 76 develops in the side wall 72 as shown in Figure 4. The formation of groove 76 creates an annular rib 74 on the interior 52 of wall 72 that compresses bead 30 causing the bead 30 to flow toward and into groove 26 to seal chambers 46 and 47 from each other and from the surrounding environment in a manner as best shown in Figure 4. The compressionary force of the rib 74 on the bead 30 can be changed by changing the size and depth of groove 76.

For example, if a quality test indicates the potential for a leak path through the connection which could be caused by dimensional extremes, eccentric shells, or the bead on the diaphragm undersized with respect to the groove of the end plate, an unacceptable servomotor could be placed in fixture 64 and groove 76 increased to create a larger rib 74 and thereby compensate for such nonmatching of parts even though they individually meet their particular manufacturing standards.

In some instances, it may not be necessary to deform the entire annular surface of wall 72. It is possible that an attachment could be added to punch 96 on crimping apparatus 56. However, it is felt that the grooving fixture or tool 70 shown in Figure 3 provides a more positive seal.

It could, of course, be restrained from deforming the wall 72 if a bead expanding solution were applied to the diaphragm. Several solutions, such as brake fluid, can be applied to bead 30 after the crimping operation to expand or swell the bead into the groove 26 and thereby seal the servomotor housing 62. Such rubber expanders do adequately swell the bead and seal the chambers. Unfortunately, they can cause the flexibility of the diaphragm to be reduced. Therefore, while there may be other methods of forming the seal for the housing 62, it appears that the annular rib 74 which compresses the bead 30 provides the best quality control for the mass production of servomotors of the kind referred to above.

**Claims**

1. A method of fastening a first shell (10) to a second shell (12) to form a housing for a fluid pressure servomotor, comprising the steps of:

a) placing on a fixture (16) the second shell which includes a radial wall (18) with a circumferential radial groove (26) located in a projection (20) and formed adjacent a radial flange (24) constituting its peripheral surface;

b) positioning a bead (30) of a diaphragm assembly (32) in said groove to define a first chamber (46) between said radial wall and diaphragm assembly;

c) placing the peripheral surface (50) on an opened end of an annular wall (72) of the first shell over said bead to surround the peripheral surface of the second shell, said first shell and diaphragm assembly defining a second chamber (47);

d) moving the first shell axially toward the second shell until the radial flange (24) of the latter engages a stop (54) on the former;

e) crimping the first shell peripheral surface (50) into engagement with the second shell radial flange (24) to hold the latter in engagement with the stop; characterized in that it further includes the steps of:

f) deforming said first shell annular wall (72) over said bead adjacent said stop to urge said bead on the diaphragm assembly into said groove to seal said first and second chambers from each other and the surrounding environment;

g) moving the crimped first and second shells to a second fixture (64);

h) rotating said second fixture while moving a tool (68, 70) into engagement with said annular wall adjacent said stop; and

i) applying a uniform force to the annular wall through the tool to form a rib on the interior of the annular wall that radially compresses the bead into the groove of the second shell.

2. A method according claim 1, characterized in that the radial compression of the diaphragm bead (30) between the rib and the groove prevents relative movement between the first and second shells.

**Patentansprüche**

1. Verfahren zur Befestigung eines ersten Gehäuseteiles (10) an einem zweiten Gehäuseteil (12) zur Ausbildung eines Gehäuses für einen Strömungsmitteldruck-Servomotor mit den folgenden Schritten:

a) Anordnen des zweiten Gehäuseteiles, das eine radiale Wand (18) mit einer in einem Vorsprung (20) angeordneten und benachbart zu einem radialen Flansch (24), der seine Umfangsfläche bildet, ausgebildeten radialen Umfangsnut (26) umfaßt, auf einer Befestigungsvorrichtung (16);

b) Anordnen eines Wulstes (30) einer Membraneinheit (32) in der Nut zur Ausbildung einer ersten Kammer (46) zwischen der radialen Wand und der Membraneinheit;

c) Anordnen der Umfangsfläche (50) auf einem geöffneten Ende einer Ringwand (72) des ersten Gehäuseteiles über dem Wulst zum Umfassen der Umfangsfläche des zweiten Gehäuseteiles, wobei das erste Gehäuseteil und die Membraneinheit, eine zweite Kammer (42) bilden;

d) Bewegen des ersten Gehäuseteiles in Axialrichtung gegen das zweite Gehäuseteil, bis der radiale Flansch (24) des letzteren mit einem Anschlag (54) am ersten Gehäuseteil in Eingriff tritt; und

e) Umbördeln der Umfangsfläche (50) des ersten Gehäuseteiles in Eingriff mit dem radialen Flansch (24) des zweiten Gehäuseteiles, um den letztgenannten mit dem Anschlag in Eingriff zu halten; gekennzeichnet durch die folgenden Schritte:

f) Verformen der Ringwand (72) des ersten Gehäuseteiles über den Wulst benachbart zu dem Anschlag, um den Wulst auf der Membraneinheit in die Nut zu pressen und damit die erste und zweite Kammer gegeneinander und gegenüber der Umgebung abzudichten;

g) Bewegen des umgebördelten ersten und zweiten Gehäuseteiles auf eine zweite Befestigungsvorrichtung (64);

h) Rotierenlassen der zweiten Befestigungsvorrichtung, während ein Werkzeug (68, 70) in Eingriff mit der Ringwand benachbart zum Anschlag bewegt wird; und

i) Aufbringen einer gleichmäßigen Kraft auf die Ringwand durch das Werkzeug zur Ausbildung einer Rippe auf der Innenseite der Ringwand, die den Wulst in Radialrichtung in die Nut des zweiten Gehäuseteiles preßt.

2. Verfahren nach Anspruch 1, dadurch gekennzeichnet, daß durch die radiale Kompression des Membranwulstes (30) zwischen die Rippe und die Nut eine Relativbewegung zwischen dem ersten und zweiten Gehäuseteil verhindert wird.

**Revendications**

1. Un procédé pour fixer une première coquille (10) à une seconde coquille (12) de façon à former un boîtier pour un servomoteur fluidique, comprenant les étapes qui consistent:

a) à placer sur un dispositif de montage (16) la seconde coquille qui comporte une paroi radiale (18) munie d'une rainure radiale circonfèrentielle située dans une partie saillante (20) formée adjacente à un rebord radial (24) qui constitue sa surface périphérique;

b) à positionner un bourrelet (30) d'un ensemble de diaphragme (32) dans ladite rainure pour délimiter une première chambre (46) entre ladite paroi radiale et l'ensemble du diaphragme;

c) à placer la surface périphérique (50) d'une extrémité ouverte d'une paroi annulaire (72) de la première coquille par dessus ledit bourrelet de façon à entourer la surface périphérique de la seconde coquille, ladite première coquille et l'ensemble de diaphragme délimitant une seconde chambre (47);

d) à déplacer la première coquille axialement en direction de la seconde coquille jusqu'à ce que le rebord radial (24) de cette dernière vienne en appui contre une butée (54) formée sur la première; et

e) à sertir la surface périphérique (50) de la première coquille en appui contre le rebord radial (24) de la seconde coquille pour maintenir ce dernier en appui contre la butée, caractérisé en ce que ce procédé comprend, en outre, les étapes qui consistent:

f) à déformer ladite paroi annulaire (72) de la première coquille par dessus ledit bourrelet au voisinage de ladite butée pour repousser ledit bourrelet formé sur l'ensemble de diaphragme dans ladite rainure afin d'isoler hermétiquement lesdites première et seconde chambres l'une de l'autre et du milieu environnant;

g) à déplacer les première et seconde coquilles serties jusqu'à un second dispositif de montage (74);

h) à faire tourner ledit dispositif de montage tout en déplaçant un outil (68, 70) en appui contre ladite paroi annulaire au voisinage de ladite butée; et

i) à appliquer une force uniforme à la paroi annulaire par l'intermédiaire de l'outil pour former sur l'intérieur de la paroi annulaire une nervure qui comprime radialement le bourrelet dans la rainure de la seconde coquille.

2. Un procédé selon la revendication 1, caractérisé en ce que la compression radiale du bourrelet (30) du diaphragme entre la nervure et la rainure empêche un mouvement relatif entre les première et seconde coquilles.

FIG. 1

FIG. 3

FIG. 2

FIG. 4